# EUROPEAN PATENT SPECIFICATION

(11) **EP 1 079 996 B1**
(45) Date of publication and mention of the grant of the patent: **08.02.2006**
(21) Application number: 99919677.7
(22) Date of filing: 07.05.1999
(51) Int. Cl.: B60R 22/40

(54) **RETRACTOR FOR VEHICLES**
AUFROLLGURT FÜR FAHRZEUGE
ENROULEUR POUR VEHICULES

(30) Priority: 18.05.1998 KR 9817768
(43) Date of publication of application: 07.03.2001
(73) Proprietor: Samsong Industries, Ltd., Seoul 150-010 (KR)
(72) Inventor: PARK, Sang-Hee, Pusan-si 618-230 (KR); KIM, Wan-Young, Changwon-si Kyungsangnam-do 641-180 (KR)
(74) Representative: Urner, Peter
(86) International application number: PCT/KR1999/000218
(87) International publication number: WO 1999/059847

(56) References cited:
- DE-A1- 3 920 333
- FR-A1- 2 696 694
- US-A- 5 368 251

## Description

### Teclinical Field

The present invention relates to a retractor for vehicles, in particular to an economical retractor of lighter weight to be mounted in the seat belt of a vehicle, and particularly to the retractor having the structure in which a spool is rotatively moved and securely placed into a locking position and comprising the simple structure of a webbing sensing element and a vehicle sensing element enabling to improve binding power by binding both sides of the spool, thereby reducing the number of the parts and improving the performance by reducing spool out.

### Background Art

As traffic means in modern society which is the daily living phenomenon and essential economical activity, a motor vehicle is generally used in transporting persons and goods on the road. In the motor vehicle which is driven for a long time and under unfavorable conditions, previously developed passive seat belt, air bag, anti-collision device, information system for keeping distance between two vehicles, etc., are mounted for safety. The scat belt for binding the user's body is drawn out of the retractor fixedly formed at the lower end of a center pillar separated from a seat in the vehicle by the predetermined distance, and fastened to a buckle mounted in one side of the seat.

Namely, a retractor which was fastened to the seat belt being operated as necessary prevents the seat belt from being drawn out when the user's upper body is unstably moved due to the unexpected accident or jolt of a vehicle.

In case of the conventional retractor comprising complicate structure of double sensing clements(a vehicle sensing element and an webbing sensing element), increased number of parts caused the increase of spool out due to delay of operation time as several parts should be through from sensing to the locking of the spool into a frame at the unexpected circumstance such as collision. Further, this retractor in which a separate cover for protecting the vehicle sensing element and webbing sensing element is surrounded also causes more parts number and larger size of the product, which is inconvenient to the user.

A retractor for vehicles according to the preamble of claim 1 is known from FR 2 696 694 A1. This prior art document shows a retractor for a vehicle seatbelt, wherein additional ratchet parts (wheel and disk) are mounted to the spool and to the mechanism cover, respectively.

US 5,368,251 discloses another retractor for vehicles including a spindle portion rotatably mounted within a housing for take-up and pay-out of a safety belt. The spindle is formed with plurality of teeth which engage and lock the plurality of teeth formed within the interior of the housing.

### Disclosure of Invention

The present invention was conceived to settle all the drawbacks of the conventional retractor and an object of the present invention is to provide an effective and economical retractor for vehicles which prevents the loss phenomenon of binding function resulting from tip to tip phenomenon(paging phenomenon) with a frame gear when a spool is rotated. This object is achieved by the retractor according to claim 1. Advantages, developments and refinements of the invention are described in the depending claims.

According to the invention, an oval pivot point is used and each division of a tooth form in the frame is varied enabling to operate a vehicle sensing element without separate rachet parts by forming two-stepped tooth form in the spool, and which reduces the number of parts and size of the product but improves the binding power, by attaching the vehicle sensing element and an webbing sensing element to each of a mechanism cover and a spring cover.

The present invention which an oval pivot point applies to is constructed to easily control tolerance around a rotation axle by point contact of the spool until locking of the spool into a frame.

### Brief Description of Drawings

Fig. 1 is a perspective view illustrating the example of a retractor for vehicles according to the present invention.
Fig. 2 is a view illustrating the state of the retractor for vehicles according to the present invention.
Fig. 3 is a view illustrating the assembly of the retractor for vehicles shown in Fig. 1.
Fig. 4 is a view illustrating the state of an webbing sensing element representing the operation of the retractor for vehicles according to the present invention.
Fig. 5 is a view illustrating the state of a vehicle sensing element representing the operation of the retractor for vehicles according to the present invention.

### Best Mode for Carrying Out the Invention

The present invention which was conceived to achieve the above object comprises a mechanism cover 4 and a spring cover 11 being assembled through a spool 3 where an inertia disc 6 and a sensor spring 7 were mounted in a frame 1, in which the frame 1 prevents tip to tip -or paging phenomenon by varying seven places of eight divisions of a tooth form(1a) at 15° and one place of the third division to the right of the tooth form(1a) at 16.5° , the tooth form(1a) is formed from a first side to a second side, i.e. from left to right to improve binding effects, the spool 3 operates a vehicle sensing element 8 without rachet parts by forming two-stepped tooth form on one side, and a spring cover 11 is formed of an oval pivot point(1b).

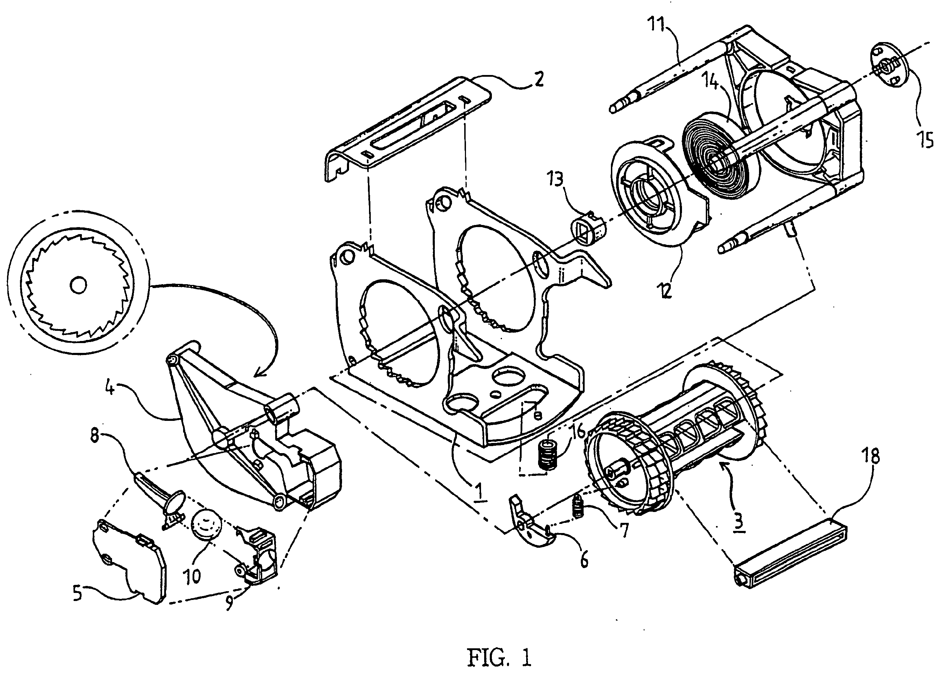

Fig. 1 is a perspective view illustrating the example of the retractor for vehicles according to the present invention. The present invention is an economical retractor of lighter weight to be mounted in the seat belt of a motor vehicle. The retractor according to the present invention which adopts a double sensing method comprising the simple structure of an webbing sensing element(an inertia disc 6) and the vehicle sensing element(a sensing lever 8) in the frame 1, and which uses a double locking type binding both sides of the spool 3 not only reduces the number of parts, but also improves the effects of binding power in comparison with the conventional retractor.

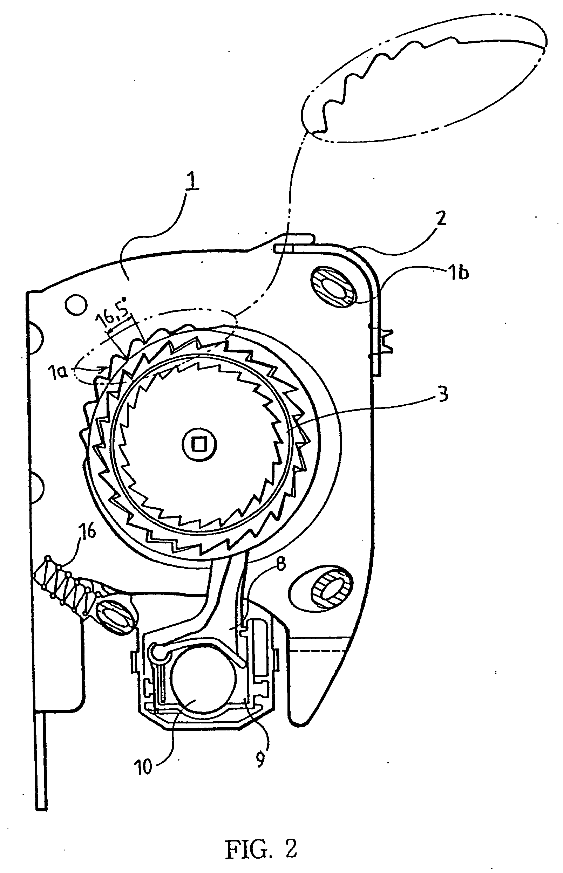

As shown in Fig. 2, paging phenomenon is prevented when the spool 3 is rotated, by varying each division of the tooth form(1a)(for example, seven places to be 15° and one place to be 16.5° , the oval pivot point(1b) is formed, the whole mechanism cover 4 is rotatively moved and securely placed into the frame 1, and two-stepped tooth form formed in the spool 3 causes the operation into the vehicle sensing lever 8 without separate rachet parts. Namely, the number of parts is reduced.

The frame 1 is made of metal and paging phenomenon can be prevented when the spool 3 is rotated, by varying each division of the tooth form(1a), i.e. seven places of eight divisions of it at 15° and one place in the third division to the right at 16.5° . In the spool 3, the tooth form is formed from left to right to improve the effects of binding power, and two-stepped tooth form formed on one side operates the vehicle sensing lever 8 without separate rachet parts.

Accordingly, by varying each division of the tooth form of the frame 1 as shown in Fig. 2, some tooth form of the spool 3 is not caught in some tooth form of the frame 1 in the motion preceding locking to the frame 1, and thus tooth form is not destroyed, thereby enabling to perform the binding function.

A tie bar 2 is mounted to prevent deformation of the frame 1, and an webbing guide 18 is mounted to prevent twisting of spool 3 side when the webbing(not shown in drawings) is drawn out, and to prevent webbing wear and friction due to contact with the frame 1. Also, the whole of the mechanism assembly except the rigid body of the frame 1 and the tie bar 2 is not fixedly assembled in the frame 1, respectively, but is movably assembled so that the assembly can be only pivoted in the oval hole of the frame 1.

Toward the two-stepped tooth form of the spool 3, the inertia disc 6 and a sensor spring 7 are assembled and operated as the webbing sensing element which is one sensing element of double sensing methods. First, the inertia disc 6 is engaged with the tooth form within the mechanism cover 4 and guides locking of the spool 3 to the frame 1 in such a state that rotation of the spool 3 was prevented. The sensor spring 7 performs smooth calibration of the inertia disc 6. On one side of the frame 1, the mechanism cover 4 wrapping the two-stepped tooth form of the spool 3 in which the inertia disc 6 and the sensor spring 7 were mounted is mounted. Inside the mechanism cover 4, the tooth form is formed.

The vehicle sensing lever 8 being engaged with the spool 3 guides the tooth form of the spool 3 to be accurately placed into the tooth form of the frame 1. In a sensor housing 9 supporting the vehicle sensing lever 8 four places of edge are formed to satisfy tilt lock and acceleration sensing and to prevent rattle noise. Accordingly, the sensor housing 9 is engaged with one side of the mechanism cover 4, and inside the housing 9, the vehicle sensing lever 8 and a sensor ball 10 are engaged and operated as the vehicle sensing element.

In the frame 1 in which the spool 3 was mounted, the mechanism cover 4 and the spring cover 11 are assembled, and on other side of tooth form of the spool 3 in the spring cover 11, an arbor 13, a spring sheet 12 and a retraction spring 14 are assembled in sequence, and are fastened with a cover cap 15. The spring cover 11 forms an oval pivot point(1b) and the spool 3 is placed into the middle. The spring cover 11 is assembled with the mechanism cover 4 through the frame 1 and a stopper is mounted to reduce tolerance when the mechanism cover 4 is assembled. Accordingly, the oval pivot point(1b) has efficiency in the respects of reduced friction effects due to point contact and control of tolerance and dimension, in comparison with the conventional pivot.

The arbor 13 applies two places of the fixed grooves of a spring hook portion as miller image so as to assemble with the retraction spring 14. A reset spring 16 supports the middle position of the mechanism assembly of the spring cover 11 and the mechanism assembly is placed into the operation position. Accordingly, by separating the mechanism part from the frame until before locking, draw-out of the webbing is maintained in a free state and offcenter of the mechanism assembly is prevented.

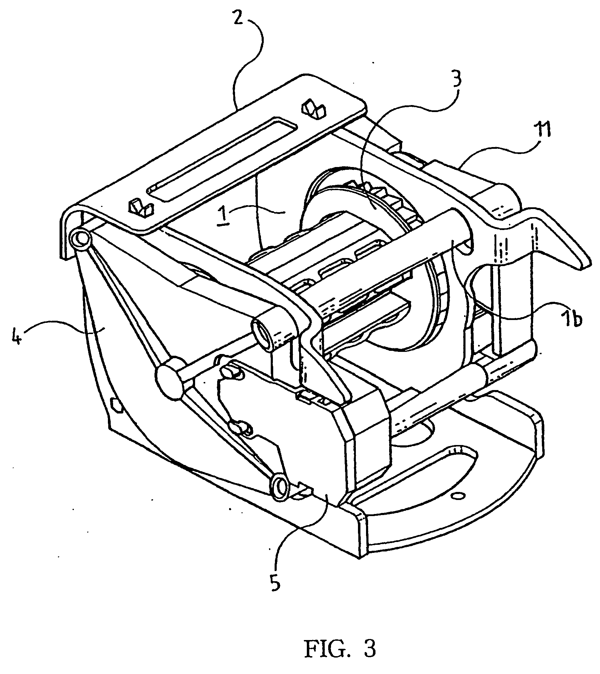

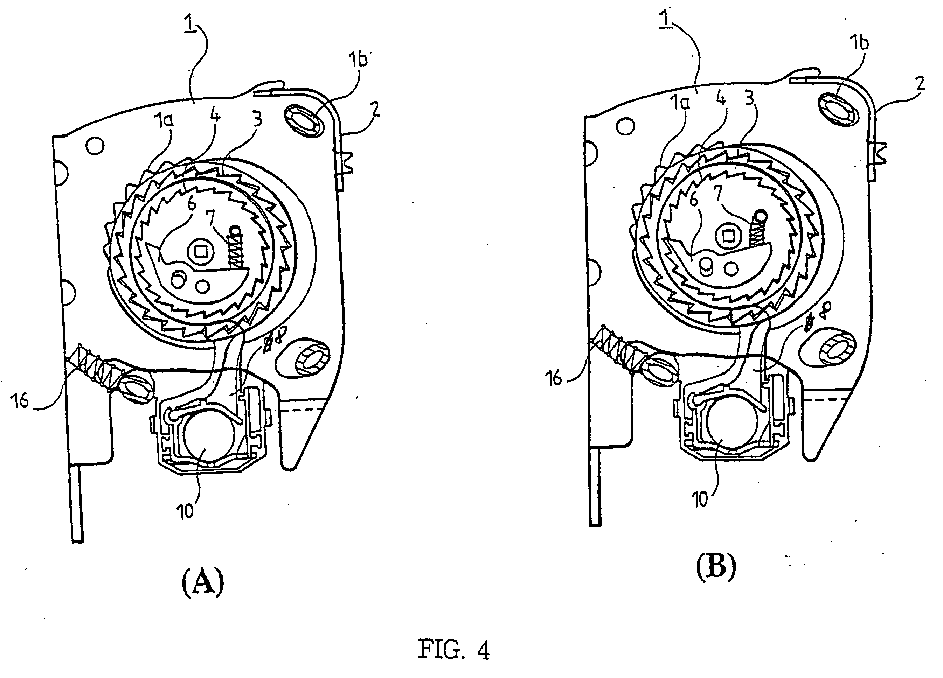

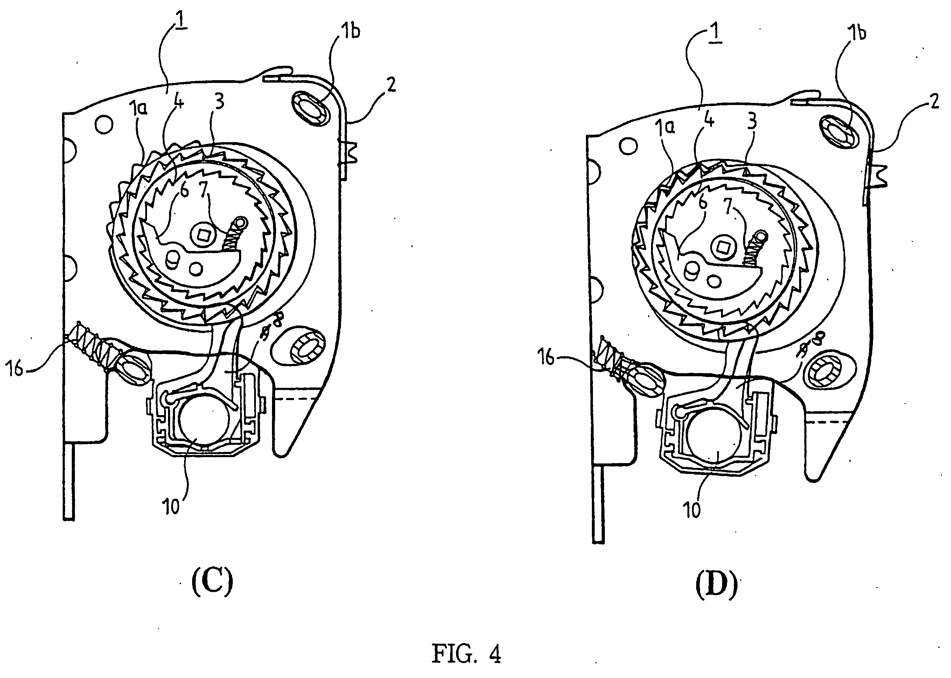

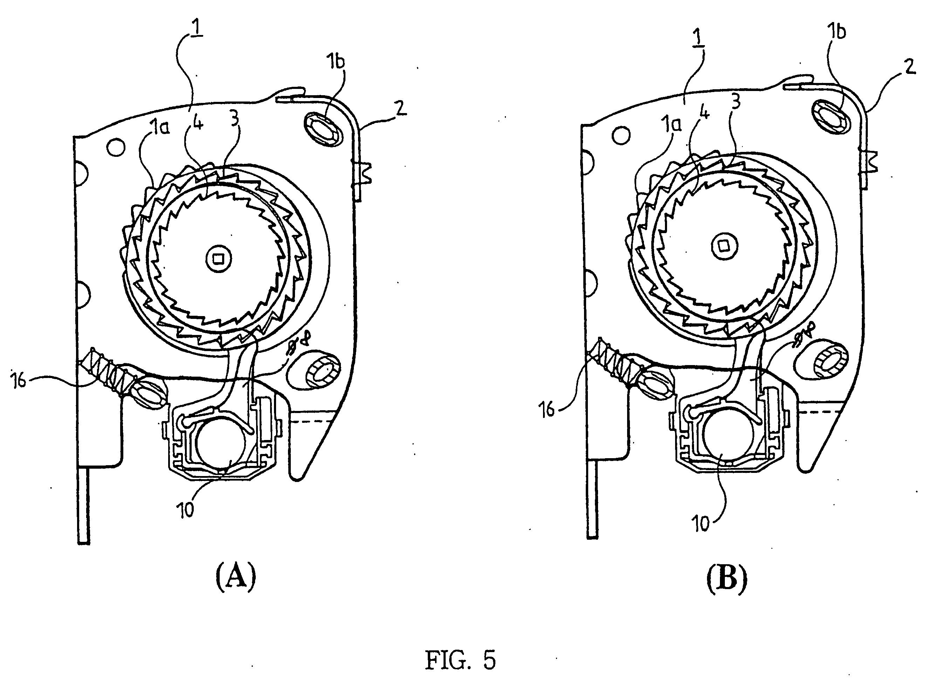

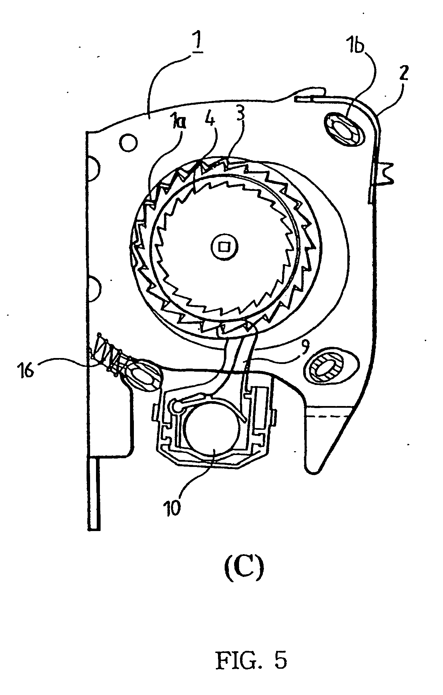

The retractor according to the present invention which was constructed as described above, adopts the double sensing method comprising the simple structure of the webbing sensing element(inertia disc) and the vehicle sensing element(sensing lever). As shown in Fig. 3, through the spool 3 which the inertia disc 6 and the sensing spring 7 were mounted in the frame 1, the mechanism cover 4 and the spring cover 11 are assembled and used in a seat belt as the finished product. The operation of the webbing sensing element and vehicle sensing element of the double sensing methods will be explained with reference to Fig. 4 and Fig. 5.

Fig. 4 is a view illustrating the state of the webbing sensing element representing the operation of the retractor for vehicles according to the present invention. The operation of the webbing sensing element as the retractor according to the present invention constructed as shown in Fig. 2 is explained. In order for the tooth form(1a) of the frame 1, two-stepped tooth form of the spool 3 and the tooth form in the mechanism cover 4 to be engaged, the inertia disc 6 and the sensor spring 7 mounted to the two-stepped tooth form side of the spool 3 are operated. Namely, Fig. 4(A) shows that at the threshold of less than 1.0g, the inertia disc 6 and the sensor spring 7 in the spool 3 make the webbing in a stable state. Fig. 4(B) shows that at the threshold of more than 1.0g, the inertia disc 6 in the spool 3 rotates to the reverse direction of the rotation axle of the spool 3 and at the same time, the sensor spring 7 is compressed, and thus, the inertia disc 6 is inserted into the tooth form in the mechanism cover 4.

As shown in Fig. 4(C), the inertia disc 6 in the spool 3 is gradually rotated and the sensor spring 7 becomes compressed and locked, and thus is engaged with the tooth form in the mechanism cover 4. As shown in Fig. 4(D), rotation of the spool 3 is in a suspended state but by means of the force applied to the webbing, the whole mechanism part is rotated around the pivot, and the tooth form of the spool 3 is engaged with the tooth form (1a) of the frame 1 to prevent draw-out of the webbing.

Fig. 5 is a view illustrating the state of the vehicle sensing element representing the operation of the retractor for vehicles according to the present invention. The operation of the vehicle sensing element as the retractor according to the present invention constructed as shown in Fig. 2 is explained. In order for the tooth form(1a) of the frame 1, two-stepped tooth form of the spool 3 and the tooth form in the mechanism cover 4 to be engaged, the vehicle sensing element 8 and the sensor ball 10 of the sensor housing 9 in the mechanism cover 4 are operated. Fig. 5(A) shows that in a normal state, the sensor ball 10 of the sensor housing 9 is placed into the hollow portion of the sensor housing 9 and thus the webbing is freely drawn out.

In the meantime, when the vehicle body is in an acceleration or deceleration state, the sensor ball 10 of the sensor housing 9 does rolling motion as shown in Fig. 5(B) and lifts up the vehicle sensing element 8 to be engaged with the two-stepped tooth form of the spool 3. Namely, the sensor lever 8 of the sensor housing 9 is engaged with the two-stepped tooth form of the spool 3. Accordingly, as shown in Fig. 5(C), rotation of the spool 3 is in a suspended state but by means of the force applied to the webbing, the whole mechanism part is rotated around the pivot, and both sides of the tooth form of the spool 3 is engaged with the tooth form (1a) of the frame 1 to perform the operation of the vehicle sensing element.

The retractor according to the present invention is an economical retractor of lighter weight to be used in a seat belt of the motor vehicle. The retractor according to the present invention which adopted a double sensing method comprising the simple structure of the webbing sensing element(refer to Fig. 4) and the vehicle sensing element(refer to Fig. 5) in the frame 1 binds the left and the right of the spool 3, and prevents the tip to tip phenomenon. Namely, the retractor according to the present invention can heighten the effects of binding power even with the reduced number of parts in comparison with the conventional retractor.

A sharp portion bent to both sides of the frame 1 is formed to protect against the drop, shock or collision. The spring cover 11 being engaged with the mechanism cover 4 is connected with the frame 1 without separate fixing tool to become the movable device of the whole mechanism when being locked. The engagement holes of the spring cover 11, the mechanism cover 4 and the frame 1 and its shaft are formed of an oval shape, and thus mutual point contact within the automatic degree can minimize the fluctuation tolerance or motion tolerance.

As the frame 1 and the spring cover 11 are formed of a projection, by placing the reset spring 16 in the middle of the product, balance of both sides is maintained when being operated as well as the sense of stability is improved when being locked. As the mechanism cover 4 forms the tooth form in order for the inertia disc 6 to sense and lock, the conventional gear is integral to the cover to reduce not only the transmission time but also the number of parts, which is the advantage of the present invention.

### Industrial Applicability

As described above, the present invention provides a retractor for vehicles enabling to reduce the number of parts. This is achieved by varying each division of the tooth form in a frame, using an oval pivot point, preventing paging phenomenon when being rotated, placing into the frame while the whole mechanism cover is rotatively moved, and operating a vehicle sensing element without rachet parts with the formation of a two-stepped tooth form on one side of a spool.

## Claims

1. A retractor for vehicles comprising
- a frame (1);
- a mechanism cover (4);
- a spring cover (11):
- a spool (3) for winding up a webbing of a safety belt, the spool (3) penetrating through two openings of the frame (1) and being rotatably mounted with a first end thereof in the mechanism cover (4) and with a second end thereof in the spring cover (11);
- an inertia disc (6) and a sensor spring (7) mounted in the frame (1);
**characterized in that**
- the spool (3) is provided at the first end thereof with two axially adjacent ratchets, wherein a first ratchet acts together with a sensing element (8) disposed in the mechanism cover (4) and a second ratchet acts together with a toothed portion (1a) of the associated opening of the frame (1);
- the toothed portion (1a) is formed from a first side to a second side;
- the toothed portion (1a) comprising eight places of varied shape for taking up a tooth of the second ratchet wherein seven places of eight divisions of the tooth form are arranged at 15° and the third place from the second side at 16.5°; and the spring cover (11) forms an oval pivot point (1b) for the mechanism cover (4).

2. A retractor according to claim 1, wherein said spring cover (11) being engaged with the mechanism cover (4) is connected to the frame (1) without separate fixing tools.

3. A retractor according to claim 1, wherein the frame (1) is provided with engaging holes of an oval shape for engagement with connecting rods of the spring cover (11) which are penetrating through the oval holes and are connected to the mechanism cover so that the spring cover (11) and the mechanism cover (4) form a mechanism assembly.

4. A retractor according to claim 1, wherein a sharply bent portion bent to both sides of the frame (1) is formed on both sides of the frame (1) to protect against drop or shock from outside.

5. A retractor according to claim 3, where in a reset spring (16) is placed on the frame (1) and supports the middle position of the mechanism assembly.

6. A retractor according to claim 1, wherein a tooth form is formed in the mechanism cover (4) and wherein the inertia disc (6) has an engagement portion which can get into engagement with said tooth form.

## Patentansprüche

1. Aufrollvorrichtung für Fahrzeuge, mit
- einem Rahmen (1);
- einer Mechanismusabdeckung (4);
- einer Federabdeckung (11);
- einer Haspel (3) zum Aufwickeln eines Gurtbandes eines Sicherheitsgurts, wobei die Haspel (3) durch zwei Öffnungen des Rahmens (1) dringt und mit einem ersten Ende in der Mechanismusabdeckung (4) und mit einem zweiten Ende in der Federabdeckung (11) drehbar angebracht ist;
- einer Trägheitsscheibe (6) und einer Sensorfeder (7), die im Rahmen (1) angebracht sind;
**dadurch gekennzeichnet, dass**
- die Haspel (3) an ihrem ersten Ende mit zwei axial benachbarten Sperrklinken versehen ist, wobei eine erste Sperrklinke mit einem in der Mechanismusabdeckung (4) angeordneten Sensorelement (8) zusammenwirkt und eine zweite Sperrklinke mit einem gezahnten Abschnitt (1a) der zugeordneten Öffnung des Rahmens (1) zusammenwirkt;
- der gezahnte Abschnitt (1a) so ausgebildet ist, dass er von einer ersten Seite zu einer zweiten Seite verläuft;
- der gezahnte Abschnitt (1a) acht Stellen mit unterschiedlicher Form aufweist, um einen Zahn der zweiten Sperrklinke aufzunehmen, wobei sieben Stellen von acht Unterteilungen der Zahnform jeweils 15° überstreichen und die dritte Stelle ausgehend von der zweiten Seite 16,5° überstreicht; und die Federabdeckung (11) einen ovalen Schwenkpunkt (1b) für die Mechanismusabdeckung (4) bildet.

2. Aufrollvorrichtung nach Anspruch 1, bei der die Federabdeckung (11), die mit der Mechanismusabdeckung (4) in Eingriff ist, mit dem Rahmen (1) ohne separate Befestigungswerkzeuge verbunden ist.

3. Aufrollvorrichtung nach Anspruch 1, bei der der Rahmen (1) mit Eingrifflöchern von ovaler Form für den Eingriff von Verbindungsstäben der Federabdeckung (11), die in die ovalen Löcher eindringen und mit der Mechanismusabdeckung verbunden sind, versehen ist, so dass die Federabdeckung (11) und die Mechanismusabdeckung (4) eine Mechanismusbaueinheit bilden.

4. Aufrollvorrichtung nach Anspruch 1, bei der auf beiden Seiten des Rahmens (1) ein stark gekrümmter Abschnitt, der zu beiden Seiten des Rahmens (1) gekrümmt ist, ausgebildet ist, um gegen ein Herabfallen oder Stöße von außerhalb geschützt zu sein.

5. Aufrollvorrichtung nach Anspruch 3, bei der an dem Rahmen (1) eine Rückstellfeder (16) angeordnet ist, die den mittleren Abschnitt der Mechanismusbaueinheit unterstützt.

6. Aufrollvorrichtung nach Anspruch 1, bei der in der Mechanismusabdeckung (4) eine Zahnform ausgebildet ist und bei der die Trägheitsscheibe (6) einen Eingriffabschnitt besitzt, der mit der Zahnform in Eingriff gelangen kann.

## Revendications

1. Un enrouleur pour véhicules comprenant
- un cadre (1) ;
- un couvercle de mécanisme (4) ;
- un couvercle de ressort (11) ;
- une bobine (3) pour enrouler une sangle d'une ceinture de sécurité, la bobine (3) pénétrant à travers deux ouvertures du cadre (1) et étant montée en rotation avec une première extrémité de celle-ci dans le couvercle de mécanisme (4) et avec une deuxième extrémité de celle-ci dans le couvercle de ressort (11) ;
- un disque d'inertie (6) et un ressort de capteur (7) montés dans le cadre (1) ;
**caractérisé en ce que**
- la bobine (3) est dotée à la première extrémité de celle-ci de deux cliquets axialement adjacents, dans laquelle un premier cliquet agit conjointement avec un élément de détection (8) disposé dans le couvercle de mécanisme (4), et un deuxième cliquet agit conjointement avec une partie dentée (1a) de l'ouverture associée du cadre (1);
- la partie dentée (1a) est formée d'un premier côté à un deuxième côté ;
- la partie dentée (1a) comprenant huit places de forme diverse pour recevoir une dent du deuxième cliquet, dans laquelle sept places de huit divisions de la forme de dent sont arrangées à 15°, et la troisième place à partir du deuxième côté à 16,5° ; et le couvercle de ressort (11) forme un point de pivotement ovale (1b) pour le couvercle de mécanisme (4).

2. Un enrouleur selon la revendication 1, dans lequel ledit couvercle de ressort (11) étant engagé avec le couvercle de mécanisme (4) est relié au cadre (1) sans outils de fixation séparés.

3. Un enrouleur selon la revendication 1, dans lequel le cadre (1) est doté de trous d'enclenchement de forme ovale pour l'enclenchement avec des bielles du couvercle du ressort (11), qui pénètrent à travers les trous ovales, et sont raccordées au couvercle de mécanisme, de sorte que le couvercle de ressort (11) et le couvercle de mécanisme (4) forment un assemblage de mécanisme.

4. Un enrouleur selon la revendication 1, dans lequel une partie fortement courbée, courbée des deux côtés du cadre (1), est formée sur les deux côtés du cadre (1) pour le protéger d'une chute ou d'un choc extérieur.

5. Un enrouleur selon la revendication 3, dans lequel un ressort de réinitialisation (16) est placé sur le cadre (1), et maintient la position centrale de l'assemblage de mécanisme.

6. Un enrouleur selon la revendication 1, dans lequel une forme de dent est formée dans le couvercle de mécanisme (4), et dans lequel le disque d'inertie (6) a une partie d'enclenchement qui peut venir s'enclencher avec ladite forme de dent.
